# EUROPEAN PATENT APPLICATION

(11) **EP 0 651 315 A1**
(43) Date of publication of application: **03.05.1995**
(21) Application number: 94306835.3
(22) Date of filing: 19.09.1994
(51) Int. Cl.: G06F 3/023

(54) **Data entry workstation**

(30) Priority: 03.11.1993 GB 9322639
(71) Applicant: International Business Machines Corporation, Armonk, N.Y. 10504 (US)
(72) Inventor: Medan, Yoav, Haifa (IL); Walach, Eugene, Kiryat Motzkin (IL)
(74) Representative: Lloyd, Richard Graham

(57) **Abstract**

A data entry workstation for a computer system comprises a keyboard for entering data as a sequence of character strings, each string comprising one or more characters from a character set, the keyboard being suitable for rapid, high volume data entry. To each of the keys (103) one or more characters are assigned so that all the characters in the character set are assigned to a number of keys less than the number of distinct characters in the character set. A processor means (100) processes the entered data, string by string and searches a dictionary of words (206, 208) to identify the possible words therein which could correspond to each string, given the assignment of characters to the keys. The workstation comprises means to identify which word of a plurality of corresponding words is correct; and means to record a correct sequence of words.

## Description

The invention relates to a data entry workstation.

In the application of data processing technology one of the more prevalent and labour intensive tasks in the manual key-in of data into computer memory. This has been improved recently with the advent of automatic optical character reading (OCR) assisted data entry which enables text data to be extracted from an image of a printed document. However, even with this development manual key-in remains an unavoidable and substantial component of the overall cost of data acquisition.

It has been recognised that the productivity of the key-in process depends on the structure of the keyboard used to enter the data. Hence extensive efforts have been made to optimise keyboard design. Usually these efforts are directed towards designing keyboards having relatively few keys. This is based upon the assumption that with only few keys present the distance between the keys is shorter and therefore the key-in process faster in the sense of there being more keystrokes per unit time.

Naturally with a smaller keypad there are less keys than possible characters. In the prior art this difficulty has been resolved by having certain characters represented by a plurality of key-strokes. An extreme example of such a system would be a morse-type key pad with only two keys. In these prior art systems overall operator productivity is determined by the impact of two opposing effects. On the one hand the number of keystrokes per hour is increased. However the number of keystrokes per character, and thus the total required number of keystrokes is also increased.

A variant on this method is disclosed in EP-0243188 which discloses a system in which chords of keys activated simultaneously can be used to retrieve stored words from a dictionary. The retrieved words rather than the entered chords which are applied to the input of a application program. US-5,218,538 discloses a similar system in which predetermined sequences of characters, ie an abbreviated form of a word including only the consonants in a word, are used to identify and retrieve words from a dictionary.

However, these prior art techniques require a considerable degree of thought on the part of the operator in identifying when and which abbreviation or chord can be used. Also the operator must be undergo a significant amount of retraining to be able to use them. Furthermore these methods require a different set of abbreviations or chords to be established for each language in which data is to be entered.

This invention is directed to overcoming these drawbacks of the prior art and provide a data entry workstation which enables more rapid and efficient data entry, which does not require retraining on the part of the operator and which is substantially language independent.

Accordingly the invention provides a data entry workstation for a computer system comprising a keyboard for entering data as a sequence of character strings, each string comprising one or more characters from a character set, the keyboard being suitable for rapid, high volume data entry, and comprising a plurality of keys, characterised in that to each of the plurality of keys one or more characters are assigned so that all the characters in the character set are assigned to a number of keys less than the number of distinct characters in the character set; and by storage means to store a dictionary of words; processor means for processing the entered data, string by string and searching the dictionary of words to identify the possible words therein which could correspond to each string, given the assignment of characters to the keys; means to identify which word of a plurality of corresponding words is correct; and means to record a correct sequence of words.

Thus key-in is performed in a fuzzy rather than deterministic fashion since each key has a number of possible characters associated with it. As a result it is possible to design a key pad where the advantage of having a shorter distance between the keys gives rise to an increase in the number of key-strokes per hour, whilst still having the same number of keystrokes per character.

A similar dictionary look-up technique is known in the field of telephone data entry where a plurality of characters are assigned to the keys of a telephone key-pad to overcome the problem of enabling alphanumeric information to be entered over the telephone. Such a system is described in Human Factors 1971 13(2) pp189-190 and US 4,677,659.

However, it has not heretofore been realised that such a system can, when used with a keyboard which is suitable for rapid, high volume data entry, in fact give rise to a significant improvement in the speed and efficiency of the data entry process.

Of course, there is a certain amount of ambiguity associated with this approach. However, the inventors have observed that in a wide variety of applications the number of valid entries is limited. For instance, if the data to be entered is a postal address, valid entries are limited by the list of valid street addresses. Hence by using computerised processing of the input data it is possible to resolve the vast majority of ambiguous cases.

In one embodiment, a specially designed keyboard comprises eight keys, arranged on the keyboard substantially in a line so that no lateral finger movement is required on the part of the operator to enter all the characters of the character set.

This has the advantage that the key assignments can be arranged so that each key has assigned to it the same set of characters usually assigned to a given finger for a conventional QUERTY or AZERTY keyboard. Thus, an operator who is experienced in operating a such a conventional keyboard can use the reduced keyboard with substantially no retraining. The speed of key-in is increased considerably by the fact that it is performed without any lateral finger movements.

Whilst in the embodiment a specially designed keyboard is used, this does not exclude the fact that a conventional computer keyboard could also be used with all characters assigned to, for instance, the central row of keys.

A data entry workstation according to the invention is less dependant on language than the above-described prior art because individual characters are assigned to the keys rather than whole words. It is possible to find relationships between groups of characters and single keys for which the efficiency of the system for many different languages would not vary significantly.

The means to identify the correct word can comprise a display device for displaying all the corresponding words to the operator and user input means to enable to the user to select the correct word. This would enable an operator manually to resolve any remaining ambiguities following processing of the input.

An embodiment of the invention will now be described, by way of example only, with reference to the accompanying drawing wherein:
Fig.1 shows a data entry workstation in one embodiment of the invention;
Fig.2 is a schematic diagram showing the logic of the embodiment of the invention;
Fig.3 is a flow diagram showing the method used in the embodiment.

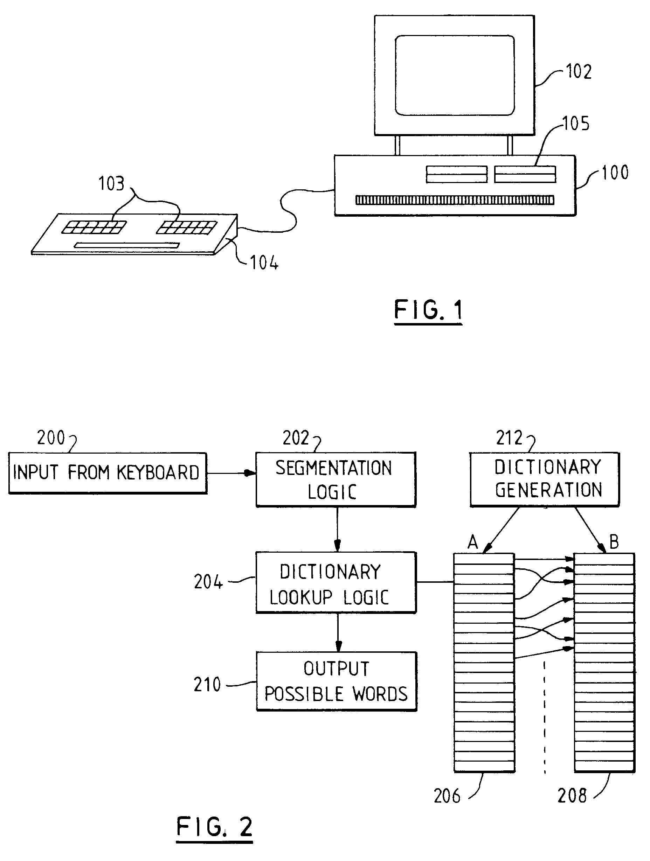

Fig.1 shows a data entry workstation in accordance with the invention. The workstation comprises a personal computer 100, display device 102 and keyboard 104. The personal computer 100 is programmed to receive data input from keyboard 104 and store the data in a suitable form in the disk storage device 105 of the personal computer 100. The data entry workstation receives input from the keyboard and generates a sequence of words which are recorded either by being stored in the workstation or passed to an application program, such as a database program or word processing program, which may be running either in the personal computer itself or in another computer, in this latter case the words being passed to the program over a suitable data communications network.

Whilst, in this embodiment, the invention is implemented using an appropriately written computer program executing on a general purpose computer, it will be recognised that the invention could be implemented using dedicated hardware or by any combination of hardware and software.

Keyboard 104 is designed in a manner aimed at optimizing operator productivity and at the same time removing the need to retrain operators for the use of the keyboard.

The keyboard comprises a line of 8 large keys 103 and a large space bar as shown in Fig 1. The distance between the keys is such that both hands of the operator can be placed conveniently on the key-board: one finger on each of the 8 keys. The space bar is actuated by the thumbs of the operator.

As a result during the key-in process, the operator needs only to press the key 103 corresponding to each finger or thumb. No finger movements are necessary laterally or horizontally.

In order to capitalize on the instincts acquired by the average operator, in this embodiment key-assignments follow exactly those of the standard QUERTY keyboard. It will be understood however that many other key-character assignments are possible and that these may depend upon the language with which the apparatus is intended to be used. It will also be understood that a conventional computer keyboard could be used to obtain the advantages of the invention by programming the computer with which it is used to only use a subset of the available keys.

This means that characters assigned to each key are as follows, starting with the left-most small finger and ending with the right-most small finger:
1. Q A Z
2. E S Z W
3. R D C
4. T F V G B
5. U J N Y H
6. I K M
7. O L ,
8. P : ; .
Fig 2 shows the logical elements which are embodied in this case by suitable programming of the personal computer 100. The input from the keyboard 200 is passed to segmentation logic 202, which recognises the data corresponding to whichever characters are used to delimit the separate character strings. These separators could be spaces in the case of continuous text data.

The separate character strings are passed to the dictionary lookup logic 204, which identifies using dictionaries 206 and 208 the words stored therein which could correspond to the character sequences that have been entered.

Dictionary look-up processing 204 consists of two stages. The first one: pre-processing 212 in which the dictionaries are generated, is performed only once for each application. The second stage is performed during data entry.
1. Pre-processing stage 212. The dictionaries are generated as follows:
   a) All the valid entries in the dictionary 208, ie the set of words that the system is capable of recognising, are organized, for convenience, in alphabetical order, though any other order could be used.
   b) All the entries are numbered, for example from "W₁" to "W_{N}", where N is the total number of the valid entries. These numbers are used as indexes for the subsequent entry retrieval.
   c) Next, for each entry "Wₙ" in the dictionary, all the characters are translated into their corresponding keys. Assuming, for convenience, that all the keyboard keys have been named K1, K2, ... , K8, and that blank has been named B. Then each dictionary entry is translated into an unique string of such keys. The word "John"_{,} for example, would be translated into K5K7K5K5B and the word "Mary" would be translated into K6K1K3K5B and so on. Such a translation is valid both for single-word entries and for multiple-word entries.
   d) This second dictionary 206 is sorted according to the corresponding keys. For example, all the entries which start with K1 are put first. All the entries, which start with K2 are put second and so on. Sorting proceeds until all "N" dictionary entries are arranged sequentially. During the sorting original entry number is retained ie entry number "p" in the "translated dictionary" has an unique association with entry number "1" in the original dictionary. As a result of the pre-processing stage two dictionaries are created: the original dictionary 208 in alphabetical order and "key-stroke dictionary" 206 with indexes relating the two dictionaries.
2. On-line stage
   This stage is applied during the data entry.
   a) During the key-in process the entry string is identified by the segmentation logic and stored in a buffer.
   b) The entry string is compared by the dictionary lookup logic to the "key-stroke dictionary" 206 until a match is found. This look up process can utilize any of the standard dictionary look-up techniques. These will be well understood by those skilled in the art and will not be described further here. At this point there are two possibilities:
      (i) The entry in the dictionary is unique. In a typical application this event would be, by far, the most frequent one. It would yield a unique entry index which in turn would be translated back into the correct input word via a reference to the original dictionary 208.
      (ii) The entry in the dictionary is not unique. In this infrequent case further operator intervention is required. This is done by retrieving all the entries which match the input string and their corresponding indexes. Each index, in turn, is translated by referring to the original dictionary into a valid input word. All the possible words are displayed to the operator on display device 102 and the user is prompted in a suitable manner to select the correct word.

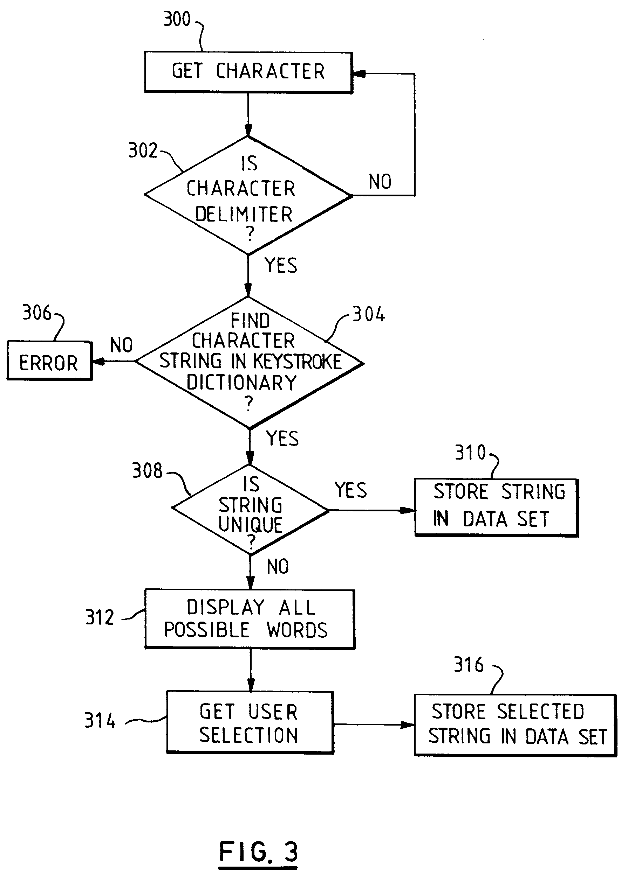

Fig.3 is a flow diagram showing an overall view of the program steps used in this embodiment.

Steps 300 and 302 correspond to the Segmentation logic referred to above. Character data is retrieved from the keyboard at step 300. A test is performed at step 302 to determine whether the character is a delimiter signifying the end of a character string (a space in the above example). If it is not a delimiter further characters are retrieved from the keyboard until a delimiter is detected. Once an entire character string has been input in this way, the dictionary lookup process 304 is used as described above to identify the words in the dictionary which could correspond to the input string. If no word can be identified an error is flagged 306.

As has been described above, in most cases the string will be unique and in this case the result of test 308 is that the word is stored 310 in the document or passed to an application program as part of whatever data set is being input as the correct word. If more than one word is located in the dictionary which could correspond to the input character sequence, then all the possible words are displayed to the operator at step 312. The user is then prompted in a suitable manner to select 314 the correct word. The selected word is then stored 316 as the correct word.

The inventors have shown the effectiveness of their invention by comparing the speed of the keying in of subscriber names using a conventional key-in and the key-in according to this invention using the list of subscriber names contained in the Finnish telephone directory as a dictionary - a total of 150136 names. An analysis of the dictionary was performed for two modes of key-in (a) conventional key-in and (b) Key-in using a key-pad in which more than one character is assigned to each key as described above, referred to below as 'fuzzy key-in'.

The number of alternative customer names for the different key-in approaches are summarised in the following table:

| | 1 Answer | 2 Answers | 3 Answers | 4 Answers |
|---|---|---|---|---|
| Usual Key-in | 100677 | 19440 | 9129 | 20890 |
| Fuzzy Key in | 96754 | 20092 | 9579 | 23711 |

It is assumed that the key-in is performed by entering the surname and the first name and if the answer is unique key-in is terminated. If there are a number of possibilities these are shown to the operator and a final choice is made. Under these assumptions, the method of the present invention would require additional keystrokes equal to the difference between the number of unique cases shown in the first column of the table. In this example it is 100677 - 96754 = 3923 extra keystrokes. Hence the average overhead, as compared with conventional keying methods, in terms of the number of extra words entered for which an extra keystroke would be required is around 3% of the number of entries in the dictionary, ie very low.

It will be understood that the above procedure describes only one possible implementation of the invention. Different variations are possible within the scope of the invention to match specific application requirements. For instance, it is possible to shorten key-in time even further by stopping data key-in once the number of valid possibilities is reduced down to below certain pre-programmed number m. In this case, the input character strings could have less characters than the words in the dictionaries. A similar approach can also be used for handling dictionaries having a number of synonym entries.

Moreover, the dictionary look-up process may be done in many ways. For example, a dictionary reference could occur after each key-stoke, which would allow the input to cease once the number of valid possibilities is below a predetermined threshold or could occur only after the entry of each word as has been described above in this embodiment.

## Claims

1. Data entry workstation for a computer system comprising a keyboard (104) for entering data as a sequence of character strings, each string comprising one or more characters from a character set, the keyboard being suitable for rapid, high volume data entry, and comprising a plurality of keys (103),
characterised in that
to each of the plurality of keys (103) one or more characters are assigned so that all the characters in the character set are assigned to a number of keys less than the number of distinct characters in the character set;
and by
storage means (105) to store a dictionary of words (206, 208);
processor means (100) for processing the entered data, string by string and searching the dictionary of words (206, 208) to identify the possible words therein which could correspond to each string, given the assignment of characters to the keys;
means to identify which word of a plurality of corresponding words is correct; and means to record a correct sequence of words.

2. Data entry workstation as claimed in claim 1 wherein the plurality of keys (103) are arranged on the keyboard substantially in a line so that no lateral finger movement is required on the part of the operator to enter all the characters of the character set.

3. Data entry workstation as claimed in claim 2 wherein the plurality of keys (103) comprises eight keys.

4. Data entry workstation as claimed in claim 2 or claim 3 wherein the key assignments are such that each key has assigned to it the same set of characters usually assigned to a given finger for a conventional QUERTY or AZERTY keyboard.

5. Data entry workstation as claimed in any preceding claim wherein the dictionary of words comprises a list of words (208) and a list of keystroke sequences (206) each having a pointer to one or more words in the list of words and wherein the means for searching the dictionary comprises means for locating the keystroke sequence corresponding to the character string in the list of keystroke sequences (206) and means for retrieving the words (208) in the list of words pointed to by the located keystroke sequence.

6. Data entry workstation as claimed any preceding claim wherein the means to identify the correct word comprises a display device (102) for displaying all the corresponding words to the operator and user input means (104) to enable to the user to select the correct word.
